(19) Europäisches Patentamt / European Patent Office / Office européen des brevets

(11) **EP 3 388 939 A1**

(12) # EUROPÄISCHE PATENTANMELDUNG

(43) Veröffentlichungstag:
**17.10.2018 Patentblatt 2018/42**

(51) Int Cl.:
**G06F 9/48** (2006.01)

(21) Anmeldenummer: **17166583.9**

(22) Anmeldetag: **13.04.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **TTTech Computertechnik AG**
**1040 Wien (AT)**

(72) Erfinder:
• **POLEDNA, Stefan**
  **3400 Klosterneuburg (AT)**
• **Kopetz, Hermann**
  **2500 Baden (AT)**

(74) Vertreter: **Patentanwaltskanzlei**
**Matschnig & Forsthuber OG**
**Biberstraße 22**
**Postfach 36**
**1010 Wien (AT)**

(54) ## VERFAHREN ZUR REDUZIERUNG DER ANTWORTZEIT IN EINEM ZEITGESTEUERTEN BETRIEBSSYSTEM

(57) Die Erfindung betrifft ein Verfahren zur Verkürzung der Antwortzeit in einem Knotenrechner (120) eines verteilten zeitgesteuerten Echtzeitcomputersystems, wobei ein Betriebssystemtask (205) des Knotenrechner (120) vor einem a priori bekannten Startzeitpunkt (213) eines Anwendungstasks (207) des Knotenrechners (120) die Inhalte von Kontroll-Registern des Knotenrechners (120), welche die Eigenschaften einer Laufzeitumgebung des Anwendungstasks (207) in dem Knotenrechner (120) charakterisieren, errechnet und diese Inhalte in die Kontroll-Register des Knotenrechners (120) schreibt.

FIG. 2

EP 3 388 939 A1

**Beschreibung**

Die Erfindung betrifft ein Verfahren zur Verkürzung der Antwortzeit in einem Knotenrechner eines verteilten zeitgesteuerten Echtzeitcomputersystems.

Weiters betrifft die Erfindung einen Knotenrechner eines verteilten zeitgesteuerten Echtzeitcomputersystems, auf welchem Knotenrechner ein Betriebssystem ausgeführt wird und auf welchem Knotenrechner eine Anwendungssoftware ausgeführt wird.

Außerdem betrifft die Erfindung ein verteiltes zeitgesteuertes Echtzeitcomputersystem mit einem oder mehreren erfindungsgemäßen Knotenrechnern.

Die Erfindung liegt im Bereich der Computertechnik. Sie betrifft ein Verfahren zur Reduzierung der Antwortzeit in einem zeitgesteuerten Computersystem.

Die Entwicklungen der Sensortechnik und der Computertechnik ermöglichen die weitgehend autonome Steuerung von technischen Objekten, wie z.B. Maschinen, die autonom arbeiten oder von Fahrzeugen, welche autonom ein Ziel ansteuern. In diesen Echtzeit-Computeranwendungen ist eine schnelle Reaktion des Computersystems besonders gefordert.

Im Folgenden bezeichnen wir die Gesamtheit aller Programme, die das Betriebssystem insbesondere eines Knotenrechners beinhaltet, als *Betriebssystemsoftware.*

Wir bezeichnen die Gesamtheit aller Programme, die ein Anwendungssystem insbesondere auf einem Knotenrechner beinhaltet, als *Anwendungssoftware.*

Unter dem Begriff *Software,* insbesondere eines Knotenrechners, wird die Gesamtheit der *Betriebssystemsoftware* und der *Anwendungssoftware* verstanden.

Wir bezeichnen die Ausführung eines Programms (d.i. ein Softwareprozess), insbesondere auf einer Maschine, z.B. auf einem Knotenrechner oder in einem Kommunikationsnetzwerk, als einen Task.

Ein Task der Betriebssystemsoftware bzw. des Betriebssystems wird auch als *Betriebssystemtask* bezeichnet, ein Task der Anwendungssoftware bzw. des Anwendungssystems wird auch als *Anwendungstask* bezeichnet.

Wir modellieren das Verhalten eines Tasks (unabhängig davon ob es sich um einen Betriebssystemtask oder einen Anwendungstask handelt) durch einen endlichen Automaten und bezeichnen einen Task, er aus gegebenen Eingabedaten und einem alten Zustand ein neues Ergebnis und einen neuen Zustand berechnet, als *Berechnungstask.*

Ein *Kommunikationstask* ist ein Task, welcher eine Nachricht oder Nachrichten von einem Sender zu einem Empfänger übermittelt. Beispielsweise handelt es sich dabei um einen Task eines Kommunikationssystems, welches Sender und Empfänger miteinander verbindet.

Es entspricht dem Stand der Technik, dass *Kontrollsysteme* (das sind Systeme zur Echtzeit-Steuerung und/oder Regelung eines *kontrollierten Objektes,* wie z.B. den oben genannten technischen Objekten und Fahrzeugen) periodisch auf einem verteilten Computersystem, insbesondere Echtzeit-Computersystem ablaufen [1, S. 7]. Ein solches verteiltes Computersystem umfasst eine Anzahl von Knotenrechnern, die über ein Kommunikationssystem Daten austauschen.

Das kontrollierte Objekt wird zu periodischen *Beobachtungszeitpunkten* (sampling points) beobachtet. Die erfassten Daten bilden die Grundlage für eine schnellst-mögliche Berechnung von neuen Sollwerten für Aktuatoren, die das Verhalten des kontrollierten Objektes beeinflussen.

Wir bezeichnen die sich periodisch wiederholende Ausführung einer Aufeinanderfolge von Berechnungstasks und *Kommunikationstasks,* die nach jeder Beobachtung durchgeführt werden müssen, als Frame.

In einem *Frame* können eine oder mehrere Echtzeittransaktionen (RT-Transactions, siehe [1, S. 24]) ablaufen.

Mit jedem Frame sind zwei Zeitparameter verbunden:

- Das *Frame-Intervall* (sampling time) gibt den zeitlichen Abstand zwischen zwei aufeinander folgenden Frames an. Die Anzahl der Frames, die pro Sekunde abgearbeitet werden, wird oft in Herz (Hz) ausgedrückt.
- Die *Ausführungsdauer* (oder auch *Antwortzeit* genannt) gibt das Zeitintervall zwischen einem sampling point und der Ausgabe der Ergebnisse eines Frames an Aktuatoren des kontrollierten Objekts an. Je kürzer die Ausführungsdauer eines Frames ist, desto besser ist die Güte eines Kontrollsystems. Bei sehr schnellen Prozessen kann eine Antwortzeit von weniger als 100 μsec notwendig sein.

Es ist eine Aufgabe der vorliegenden Erfindung, die Ausführungsdauer eines Frames in einem zeitgesteuerten verteilten Computer System zu reduzieren.

Diese Aufgabe wird mit einem eingangs genannten Verfahren sowie Knotenrechner dadurch gelöst, dass erfindungsgemäß ein Betriebssystemtask des Knotenrechners vor einem a priori bekannten Startzeitpunkt eines Anwendungstasks des Knotenrechners die Inhalte von Kontroll-Registern des Knotenrechners, welche die Eigenschaften einer Laufzeitumgebung des Anwendungstasks in dem Knotenrechner charakterisieren, errechnet und diese Inhalte in die Kontroll-Register des Knotenrechners schreibt.

Vorteilhafte Ausgestaltungen des erfindungsgemäßen Verfahrens, Knotenrechners und Computersystems sind im Folgenden beschrieben:

➢ ein Initialisierungstask überprüft vor dem a priori bekannten Startzeitpunkt des Anwendungstasks die Inhalte der Kontroll-Register des Knotenrechners, welche die Eigenschaften der Laufzeitumgebung des Anwendungstasks charakterisieren;

➢ ein bzw. der Initialisierungstask vor dem a priori bekannten Startzeitpunkt des Anwendungstasks eine Initialisierung der Datenstrukturen des Anwendungstasks vornimmt.

Im Folgenden ist die Erfindung an Hand eines in der Zeichnungen gezeigten Ausführungsbeispiels beschrieben. In den Zeichnungen zeigt

Fig. 1 eine einfache Echtzeittransaktion, die innerhalb eines Frames abläuft,

Fig. 2a die Abläufe von Betriebssystem- und Anwendungstasks in einem ereignisgesteuerten Knotenrechner am Beispiel des Knotenrechners 120 der Fig. 1, und

Fig. 2b die Abläufe von Betriebssystem- und Anwendungstasks in einem zeitgesteuerten Knotenrechner am Beispiel des Knotenrechners 120 der Fig. 1.

Der Einfachheit halber wird im Folgenden von "einem Sensor" und "einem Aktuator" die Rede sein, da die Anzahl dieser Elemente für das Verständnis der Erfindung nebensächlich ist. Es versteht sich aber für den Fachmann, dass auch zwei oder mehr Sensoren und/ oder zwei oder mehr Aktuatoren vorgesehen sein können, auch wenn dies nicht explizit erwähnt ist.

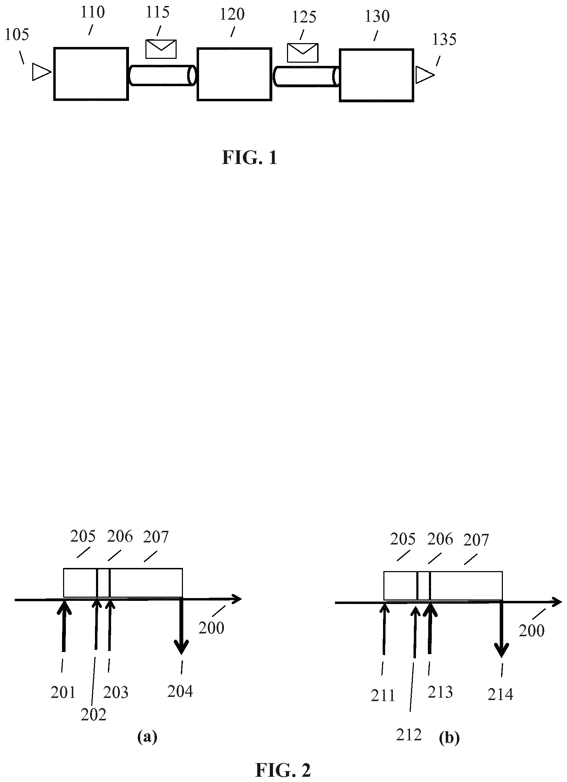

Entsprechend dem gegenwärtigen Stand der Technik wird in der Mehrzahl der Fälle eine Echtzeittransaktion entsprechend dem Prinzip der Ereignissteuerung abgearbeitet. In diesen Systemen werden von einem Knotenrechner 110, wie in Fig. 1 gezeigt, Rohdaten (*raw data,* siehe [1, S. 233]) mit einem Sensor 105 zu periodischen, nicht global synchronisierten Beobachtungszeitpunkten erfasst. Nach Vorverarbeitung der Sensordaten durch den Knotenrechner 110 wird eine Nachricht 115 mit den kalibrierten Sensordaten (*measured data,* siehe [1, S. 233] über ein ereignisgesteuertes Kommunikationssystem an den Knotenrechner 120 gesendet. Sobald die Nachricht 115 bei Knotenrechner 120 eintrifft (in einem ereignisgesteuerten System ist der Zeitpunkt 201 (siehe Fig. 2a), zu dem die Nachricht 115 beim Knotenrechner 120 eintrifft, *a priori* nicht bekannt), beginnt der Knotenrechner 120 mit einem Kontextwechsel und errechnet danach neue Sollwerte mittels eines spezifizierten Algorithmus und sendet diese neuen Sollwerte über ein ereignisgesteuertes Kommunikationssystem in Nachricht 125 an eine Aktuatorsteuerung 130. Der Knotenrechner (Aktuatorsteuerung) 130 übergibt gibt die Sollwerte an einen Aktuator 135.

Wieder unter Verweis auf Fig. 1, wird im Folgenden ein zeitgesteuertes Computersystem betrachtet, es wird also nunmehr davon ausgegangen, dass Fig. 1 ein zeitgesteuertes, insbesondere ein verteiltes zeitgesteuertes Computersystem darstellt. In einem zeitgesteuerten System sind die Zeitpunkte, zu denen das kontrollierte Objekt beobachtet wird und zu denen Nachrichten gesendet und empfangen werden, mit einer globalen Zeit synchronisiert. Diese Zeitpunkte werden *a priori* festgelegt. Zu einem periodischen, *a priori* bekannten Beobachtungszeitpunkt 211 (Fig. 2b) werden von Knotenrechner 110 Rohdaten (raw data, siehe [1, S. 233]) mit einem Sensor 105 erfasst. Nach Vorverarbeitung der Sensordaten durch den Knotenrechner 110 wird eine Nachricht 115 mit den kalibrierten Sensordaten (measured data, siehe [1, S. 233]) über ein zeitgesteuertes Kommunikationssystem an Knotenrechner 120 gesendet, wo die Nachricht 115 mit den in ihr enthaltenen Daten, welche Eingabedaten für einen Anwendungstask (Berechnungstask der Anwendungssoftware) 207 darstellen, zum *a priori* bekannten Zeitpunkt 213 eintrifft. Dieser Berechnungstask (der Anwendungssoftware) 207 im Knotenrechner 120 errechnet neue Sollwerte mittels eines entsprechenden Algorithmus und sendet diese neuen Sollwerte über ein zeitgesteuertes Kommunikationssystem in einer Nachricht 125 an einen Knotenrechner (Aktuatorsteuerung) 130. Der Knotenrechner 130 übergibt die Sollwerte an einen Aktuator 135.

Nochmals zurückkommend auf ein ereignisgesteuertes Computersystem zeigt Fig. 2a den zeitlichen Ablauf der Tasks bei einem ereignisgesteuerten Betriebssystem des Knotenrechners 120. Die Abszisse 200 zeigt das Fortschreiten der Zeit. Zu einem *a priori* nicht bekannten Zeitpunkt 201 trifft die Nachricht 115 beim Knotenrechner 120 ein und löst einen Kontextwechsel im Knotenrechner 120 aus.

Wenn ein Betriebssystem eines Knotenrechners auf Grund der eingetroffenen Nachricht 115 einen Kontextwechsel zwischen einem laufenden und einem neuen Anwendungstasks, insbesondere zwischen Berechnungstask der Anwendungssoftware, vorzunehmen hat, so muss ein *Betriebssystemtask* vor dem *Startzeitpunkt* des neuen Anwendungstasks die Inhalte der Kontroll-Register des Computers (Knotenrechners), die die *Eigenschaften der Laufzeitumgebung* des neuen Anwendungstasks charakterisieren, festlegen.

Die *Eigenschaften der Laufzeitumgebung* des neuen Anwendungstasks legen zumindest die folgenden Eigenschaften fest (unabhängig davon, ob es sich um ein ereignisgesteuertes oder zeitgesteuertes Computersystem handelt):

- welche Datenbereiche der Anwendungstask lesen darf,
- welche Datenbereiche der Anwendungstask beschreiben darf,
- welche Datenbereiche des Anwendungstasks von anderen im Betriebssystem aktiven Tasks gelesen bzw. beschrieben werden dürfen, und
- wie lange der Anwendungstask für seine Berechnungen brauchen darf.

Nach Beendigung des *Betriebssystemtasks* 205 zum Zeitpunkt 202 kann ein anwendungsspezifischer *Initialisierungstask* 206 im Intervall zwischen den Zeitpunkten 202, 203 die Inhalte der vom Betriebssystemtask 205 gesetzten Kontroll-Register des Computers (Knotenrechners) validieren und die Datenstrukturen des Anwendungstasks initialisieren.

Die Kontroll-Register des Computers sind validiert, wenn mindestens die folgenden Bedingungen erfüllt sind

- Die Daten des Anwendungstasks sind vor nicht autorisiertem Zugriff durch andere Tasks geschützt.
- Die gesetzten Lese/Schreib Rechte zu den Daten im Computersystem entsprechen der Spezifikation des Anwendungstasks.
- Die Adressen zu den Eingabe/Ausgabedaten entsprechen der Spezifikation des Anwendungstasks.
- Die vom Betriebssystem zu überwachenden Laufzeitvorgaben der Anwendungssoftware entsprechen der Spezifikation des Anwendungstasks.

Nach Abschluss dieses *Initialisierungstasks* 206 zum Zeitpunkt 203 greift der Anwendungstask 207 auf die in der Nachricht 115 transportierten Daten dieser Echtzeittransaktion zu und berechnet die neuen Sollwerte.

Zu einem Zeitpunkt 204 ist das Anwendungstask 207 mit seinen Berechnungen fertig und übergibt die Berechnungen mittels der Nachricht 125 (Fig. 1) an den Knoten 130.

Nochmals zurückkommen auf die obige Darstellung eines zeitgesteuerten Computersystems an Hand von Fig. 1 ist in Fig. 2 b der zeitliche Ablauf eines Taskwechsels in einem zeitgesteuerten Betriebssystem des Knotenrechners 120 dargestellt. Die Abszisse 200 zeigt das Fortschreiten der Zeit. In einem zeitgesteuerten System ist *a priori* bekannt, dass zu einem *Startzeitpunkt* 213 die Nachricht 115 bei dem Knotenrechner 120 gerade eingetroffen ist und der Anwendungstask 207 mit der Berechnung beginnen kann. Erfindungsgemäß kann auf Grund dieses *a priori* Wissens ein Betriebssystemtask 205 des Knotenrechners 120 schon zu einem Zeitpunkt 211 - vor dem Eintreffen der Nachricht 115 bei Knotenrechner 120 - mit der Berechnung der neuen Inhalte der Kontroll-Register beginnen. Nach Abschluss des Betriebssystemtasks 205 beginnt ein Initialisierungstask 206 zum Zeitpunkt 212 mit seinen Berechnungen, sodass er zum Startzeitpunkt 213 des Anwendungstasks 207 fertig ist. Zu diesem a priori bekannten Zeitpunkt 213 ist die Nachricht 115 mit den Eingabedaten für den Anwendungstask 207 eingetroffen.

Zu einem Zeitpunkt 214 ist das Anwendungstask 207 mit seinen Berechnungen fertig und übergibt die Berechnungen mittels der Nachricht 125 (Fig. 1) an den Knoten 130.

Unter der Voraussetzung, dass *die Worst Case Execution Time (WCET)* des Betriebssystemtasks 205 und des Initialisierungstasks 206 *a priori* bekannt sind ergibt sich der Zeitpunkt 211 zu:

$$\text{Zeitpunkt 211} = a\ priori\ \text{bekannter Zeitpunkt 213} - \text{WCET Betriebssystemtask 205} - \text{WCET}$$

$$\text{Initialisierungstask 206}$$

Zum errechneten Zeitpunkt 211 beginnt das Betriebssystem mit dem Kontextwechsel und zum *a priori* bekannten Zeitpunkt 213 beginnt der Anwendungstask 207 mit dem Lesen der vom zeitgesteuerten Kommunikationssystem gelieferten Eingabedaten.

Durch diese Erfindung wird die *Ausführungsdauer* (oder auch *Antwortzeit* genannt) eines Frames in jedem zeitgesteuerten Rechnerknoten um die WCETs des Betriebssystemtasks 205 und Initialisierungstasks 206 verkürzt. Diese Verkürzung führt zu einer Verbesserung der Qualität der Regelung.

Zitierte Literatur:

[1] Kopetz, H. Real-Time Systems, Design Principles for Distributed Embedded Applications. Springer Verlag. 2011.

**Patentansprüche**

1. Verfahren zur Verkürzung der Antwortzeit in einem Knotenrechner (120) eines verteilten zeitgesteuerten Echtzeitcomputersystems,
   **dadurch gekennzeichnet, dass**
   ein Betriebssystemtask (205) des Knotenrechner (120) vor einem a priori bekannten Startzeitpunkt (213) eines Anwendungstasks (207) des Knotenrechners (120) die Inhalte von Kontroll-Registern des Knotenrechners (120), welche die Eigenschaften einer Laufzeitumgebung des Anwendungstasks (207) in dem Knotenrechner (120) charakterisieren, errechnet und diese Inhalte in die Kontroll-Register des Knotenrechners (120) schreibt.

2. Verfahren nach Anspruch 1, **dadurch gekennzeichnet, dass** ein Initialisierungstask (206) vor dem a priori bekannten Startzeitpunkt (213) des Anwendungstasks (207) die Inhalte der Kontroll-Register des Knotenrechners (120), welche die Eigenschaften der Laufzeitumgebung des Anwendungstasks (207) charakterisieren, überprüft.

3. Verfahren nach Anspruch 1 oder 2, **dadurch gekennzeichnet, dass** ein bzw. der Initialisierungstask (120) vor dem a priori bekannten Startzeitpunkt (213) des Anwendungstasks (207) eine Initialisierung der Datenstrukturen des Anwendungstasks (207) vornimmt.

4. Knotenrechner (120) eines verteilten zeitgesteuerten Echtzeitcomputersystems, auf welchem Knotenrechner (120) ein Betriebssystem ausgeführt wird und auf welchem Knotenrechner (120) eine Anwendungssoftware ausgeführt wird,
   **dadurch gekennzeichnet, dass**
   ein Betriebssystemtask (205) des Betriebssystem des Knotenrechner (120) vor einem a priori bekannten Startzeitpunkt (213) eines Anwendungstasks (207) der Anwendungssoftware des Knotenrechners (120) die Inhalte von Kontroll-Registers des Knotenrechners (120), welche die Eigenschaften einer Laufzeitumgebung des Anwendungstasks (207) in dem Knotenrechner (120) charakterisieren, errechnet und diese Inhalte in die Kontroll-Register des Knotenrechners (120) schreibt.

5. Knotenrechner nach Anspruch 4, **dadurch gekennzeichnet, dass** ein Initialisierungstask (206) vor dem a priori bekannten Startzeitpunkt (213) des Anwendungstasks (207) die Inhalte der Kontroll-Register des Knotenrechners (120), welche die Eigenschaften der Laufzeitumgebung des Anwendungstasks (207) charakterisieren, überprüft.

6. Knotenrechner nach Anspruch 4 oder 5, **dadurch gekennzeichnet, dass** ein bzw. der Initialisierungstask (120) vor dem a priori bekannten Startzeitpunkt (213) des Anwendungstasks (207) eine Initialisierung der Datenstrukturen des Anwendungstasks (207) vornimmt.

7. Verteiltes zeitgesteuertes Echtzeit-Computersystem umfassend Knotenrechner, **dadurch gekennzeichnet, dass** einer oder mehrere Knotenrechner als Knotenrechner nach einem der Ansprüche 4 bis 6 ausgebildet sind.

110    115    120    125    130

105                                    135

**FIG. 1**

205  206  207              205  206  207

200                              200

201   203   204          211   213   214

202                         212

**(a)**                       **(b)**

**FIG. 2**

Europäisches
Patentamt

European
Patent Office

Office européen
des brevets

**EUROPÄISCHER RECHERCHENBERICHT**

Nummer der Anmeldung

EP 17 16 6583

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2011/159209 A1 (SAAB AB [SE]; DANIELSSON TORKEL [SE]; PETTERSSON ANDERS [SE]; HAAKEGAA) 22. Dezember 2011 (2011-12-22) * das ganze Dokument * ----- | 1-7 | INV. G06F9/48 |
| A | US 6 715 005 B1 (RODRIGUEZ JORGE R [US] ET AL) 30. März 2004 (2004-03-30) * das ganze Dokument * ----- | 1-7 | |

RECHERCHIERTE
SACHGEBIETE (IPC)

G06F

Der vorliegende Recherchenbericht wurde für alle Patentansprüche erstellt

| Recherchenort | Abschlußdatum der Recherche | Prüfer |
|---|---|---|
| Den Haag | 12. Oktober 2017 | Beyer, Steffen |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 17 16 6583

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-10-2017

| Im Recherchenbericht angeführtes Patentdokument | Datum der Veröffentlichung | Mitglied(er) der Patentfamilie | Datum der Veröffentlichung |
|---|---|---|---|
| WO 2011159209 A1 | 22-12-2011 | EP 2583437 A1<br>US 2013138271 A1<br>WO 2011159209 A1 | 24-04-2013<br>30-05-2013<br>22-12-2011 |
| US 6715005 B1 | 30-03-2004 | KEINE | |

EPO FORM P0461

Für nähere Einzelheiten zu diesem Anhang : siehe Amtsblatt des Europäischen Patentamts, Nr.12/82